# EUROPEAN PATENT SPECIFICATION

(11) **EP 3 715 237 B1**
(45) Date of publication and mention of the grant of the patent: **23.03.2022**
(21) Application number: 20161711.5
(22) Date of filing: 09.03.2020
(51) Int. Cl.: B62M 6/90, B60L 15/20, B62K 11/04

(54) **ELECTRIC VEHICLE AND CONTROL THEROF**
ELEKTRISCHES FAHRZEUG UND STEUERUNG
VÉHICULE ÉLECTRIQUE ET CONTRÔLE

(30) Priority: 27.03.2019 JP 2019060554
(43) Date of publication of application: 30.09.2020
(73) Proprietor: Honda Motor Co., Ltd., Tokyo 107-8556 (JP)
(72) Inventor: Kubota, Ryo, Saitama, 351-0193 (JP); Sahata, Tomoyuki, Tokyo, 107-8556 (JP); Ochiai, Shuichi, Saitama, 351-0193 (JP); Kawate, Tatsuya, Saitama, 351-0193 (JP); Suzuki, Shosuke, Saitama, 351-0193 (JP)
(74) Representative: Beder, Jens

(56) References cited:
- EP-A2- 1 454 787
- US-A- 5 893 895

## Description

The present invention relates to a running gear.

Conventionally, there is known an electric vehicle that includes a battery and a capacitor, as a driving source of the electric vehicle, and supplies a motor from the battery or the capacitor with a required electric power in accordance with an accelerator manipulated variable (absolute value) by an occupant (for example, see Japanese Patent No. 3352534).

Japanese Patent No. 3352534 mainly targets a four-wheeled vehicle, and thus is configured to supply the motor from the battery or the capacitor with the required electric power, based on the absolute value of the accelerator manipulated variable. However, when a two-wheeled vehicle is assumed, it may be preferably configured to ensure responding to a rapid acceleration request from a rider. Further, EP 1454787 A2 describes a running gear with all the features of the preamble of the independent claim.

An object of the present invention is to provide a running gear that ensures responding to the rapid acceleration request from a rider.

A running gear includes an electric motor (52), a driving battery (56), a capacitor (57), a throttle sensor (71), and a control unit (54). The driving battery (56) supplies power to the electric motor (52). The capacitor (57) supplies power to the electric motor (52). The throttle sensor (71) detects a throttle manipulated variable by an occupant who rides a vehicle. The control unit (54) controls a power supply amount to the electric motor (52) in accordance with a slot manipulated variable. The control unit (54) controls the power supply to the electric motor (52) based on a time change rate of the throttle manipulated variable.

In the above-described configuration, when the time change rate is equal to or more than a predetermined value, the control unit (54) may detect a remaining amount of the driving battery (56), and when the remaining amount is equal to or more than a predetermined value, the control unit (54) may perform a power supply from the driving battery (56) to the electric motor (52).

Further, in the above-described configuration, when the remaining amount of the capacitor is less than the predetermined value, the control unit detects the remaining amount of the auxiliary machine battery. When the remaining amount of the auxiliary machine battery is equal to or more than the predetermined value, the control unit asks the occupant a presence/absence of the acceleration request for confirmation. Thus, the presence/absence of the rapid acceleration request can be grasped using the auxiliary machine battery.

Further, in the above-described configuration, when the remaining amount of the driving battery (56) is less than the predetermined value, the control unit (54) may detect a remaining amount of the capacitor (57), and when the remaining amount of the capacitor (57) is equal to or more than a predetermined value, the control unit (54) may perform a power supply from the capacitor (57) to the electric motor (52).

Further, in the above-described configuration, the control unit (54) may calculate how long the capacitor (57) is capable of energizing when the capacitor (57) energizes the electric motor (52), and the control unit (54) may include a notification device (68) that notifies the occupant of an energizable period.

Further, in the above-described configuration, the notification device (68) may be a meter (75) and displays the energizable period on the meter (75).

Further, in the above-described configuration, the notification device (68) may be a sound output device (83).

Further, in the above-described configuration, the notification device (68) may be a short distance communication device (77) that includes a transmitter (81) and a receiver (82). The transmitter (81) is disposed on a vehicle body side. The receiver (82) is disposed at a proximity of a rider.

Further, in the above-described configuration, when the remaining amount of the capacitor (57) is less than the predetermined value, the control unit (54) may detect a remaining amount of an auxiliary machine battery (58), and when the remaining amount of the auxiliary machine battery (58) is equal to or more than a predetermined value, the control unit (54) may ask the occupant a presence/absence of an acceleration request for confirmation.

Further, in the above-described configuration, when the acceleration request from the occupant is present, a voltage of the auxiliary machine battery (58) may be boosted to supply power to the electric motor (52).

In the running gear, since the control unit controls the power supply to the electric motor based on the time change rate of the throttle manipulated variable, when it is applied to a two-wheeled vehicle, this ensures the improved response that responds to the rapid acceleration request from the rider.

In the above-described configuration, when the time change rate is equal to or more than a predetermined value, the control unit detects the remaining amount of the driving battery. When this remaining amount is equal to or more than a predetermined value, the control unit performs the power supply from the driving battery to the electric motor. Thus, when the driving battery has a sufficient remaining amount, the control unit can perform the power supply from the driving battery to the electric motor.

Further, in the above-described configuration, when the remaining amount of the driving battery is less than the predetermined value, the control unit detects the remaining amount of the capacitor. When the remaining amount of the capacitor is equal to or more than the predetermined value, the control unit performs the power supply from the capacitor to the electric motor. Thus, since the control unit can perform the power supply from the capacitor to the electric motor, this ensures the improved response.

Further, in the above-described configuration, the control unit calculates how long the capacitor is capable of energizing when the capacitor energizes the electric motor and includes the notification device that notifies the occupant of an energizable period. Thus, the occupant can grasp how long the rapid acceleration can be performed.

Further, in the above-described configuration, the notification device is the meter and displays the energizable period on the meter. Thus, the occupant can grasp the period during which the rapid acceleration can be performed by looking at the meter.

Further, in the above-described configuration, the notification device is the sound output device. Thus, the occupant can grasp the period during which the rapid acceleration can be performed by listening to a sound.

Further, in the above-described configuration, the notification device is the short distance communication device that includes the transmitter and the receiver. The transmitter is disposed on the vehicle body side. The receiver is disposed at the proximity of the rider. Thus, when the receiver is installed to, for example, a helmet, the period during which the rapid acceleration can be performed can be grasped.

Further, in the above-described configuration, when the acceleration request from the occupant is present, the voltage of the auxiliary machine battery is boosted to supply power to the electric motor. Thus, using the auxiliary machine battery ensures performing the rapid acceleration.

FIG. 1 is a left side view illustrating a motorcycle of a first embodiment of the present invention.
FIG. 2 is a block diagram of a running gear.
FIG. 3 is a drawing describing a driving battery.
FIG. 4 is a graph illustrating a relationship between additional voltage change to an electric motor and time change rate of a throttle opening degree.
FIG. 5 is a drawing illustrating a display unit of a meter.
FIG. 6 is a drawing illustrating a display unit of a meter of a modification.
FIG. 7 is a flowchart illustrating operations of the first embodiment of a running gear.
FIG. 8 is a flowchart illustrating operations of a second embodiment of the running gear.

The following describes respective embodiments of the present invention with reference to the drawings. Note that, in the description, descriptions on directions such as front and rear, right and left, and upper and lower are identical to directions with respect to a vehicle body of a motorcycle 10 insofar as descriptions are not particularly given. A reference sign FR indicated in each drawing indicates a front of the vehicle body, a reference sign UP indicates an upper side of the vehicle body, and a reference sign LH indicates a left of the vehicle body.

### <First Embodiment>

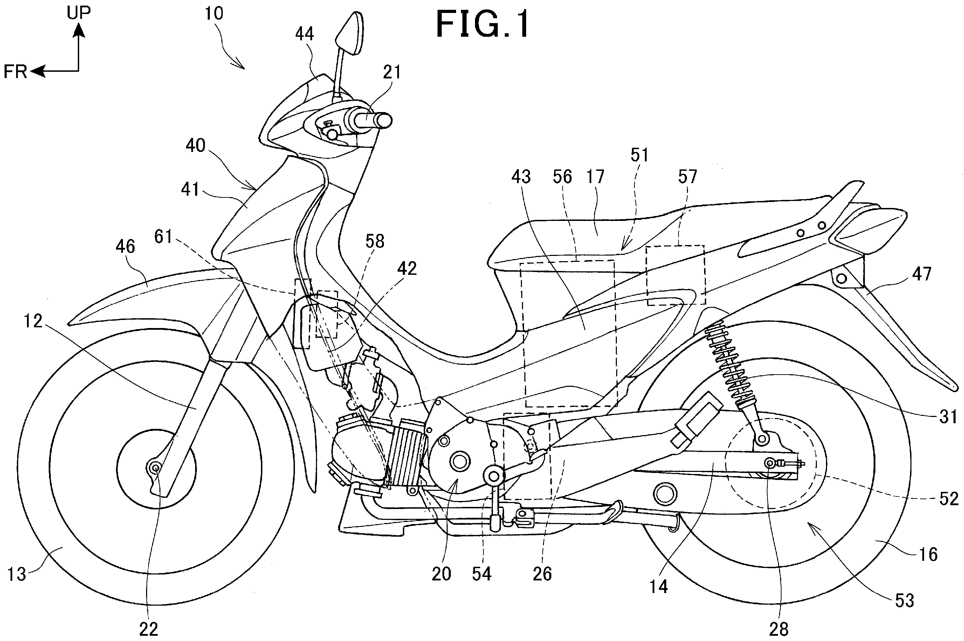

FIG. 1 is a left side view illustrating the motorcycle 10 of a first embodiment of the present invention.

The motorcycle 10 is a saddle riding hybrid vehicle that includes a front wheel 13, a rear wheel 16, and a seat 17. In a front portion of a body frame (not illustrated), the front wheel 13 is supported via front forks 12. In a lower portion of the body frame, the rear wheel 16 is supported via a swing arm 14. In an upper portion of the body frame, the seat 17 is arranged. To the lower portion of the body frame, an engine 20 is mounted.

The front forks 12 are steerably supported in a front end portion of the body frame. The front forks 12 have upper end portions to which a handlebar 21 is mounted, and have lower end portions on which the front wheel 13 is supported via an axle 22.

In a lower portion of the center portion of front and rear of the body frame, a pivot shaft 26 is disposed. The swing arm 14 is vertically swingable and mounted to the pivot shaft 26. The swing arm 14 has a rear end portion on which the rear wheel 16 is supported via an axle 28.

Between the rear end portion of the swing arm 14, and the upper portion of the body frame positioned on an upper side of the swing arm 14, a rear cushion unit 31 having a buffer function is bridged.

The body frame is mostly covered with a vehicle body cover 40.

The vehicle body cover 40 includes a front cover 41, a leg shield 42, a right and left pair of body side covers 43, and a handlebar cover 44.

The front cover 41 covers the upper portions of the front forks 12 from the front. The leg shield 42 extends from the front cover 41 toward both lateral sides and covers the upper portions of the front forks 12 from the rear. The right and left body side covers 43 cover an underneath of the seat 17 from the front and the lateral sides. The handlebar cover 44 covers a center portion of the handlebar 21.

The front wheel 13 is covered with a front fender 46 from an upper side. The rear wheel 16 is covered with a rear fender 47 from the upper side.

The motorcycle 10 includes a running gear 53 that drives an electric motor 52 using a power supply 51 to generate a driving power for the rear wheel 16. The motorcycle 10 is a hybrid vehicle where the rear wheel 16 is driven by at least one of the engine 20 and the electric motor 52.

The running gear 53 includes a Power Control Unit (PCU) 54 that controls the respective units of the power supply 51, the electric motor 52, and the running gear 53.

The power supply 51 includes a driving battery 56, a capacitor 57, and an auxiliary machine battery 58. The driving battery 56 is mainly used. The capacitor 57 and the auxiliary machine battery 58 are used at a time of a rapid acceleration.

The electric motor 52 is a wheel-in motor that is disposed in the rear end portion of the swing arm 14 and is arranged within a wheel of the rear wheel 16.

The PCU 54 is arranged between the lower portion of the body frame and the engine 20.

The driving battery 56 is arranged in a space underneath a front portion of the seat 17. The capacitor 57 is arranged in a space on a rear of the driving battery 56 underneath a rear portion of the seat 17. The auxiliary machine battery 58 is arranged inside the leg shield 42 on a rear of the front fork 12.

On a front of the auxiliary machine battery 58 on the rear of the front fork 12, a radiator 61 that cools the driving battery 56 is arranged. The radiator 61 is connected to the driving battery 56 side with a plurality of hoses (not illustrated). In the middle of the hoses, a pump (not illustrated) and a switching valve (not illustrated) are disposed. The pump circulates a cooling water flowing inside the radiator 61. The switching valve switches a flow passage of the cooling water.

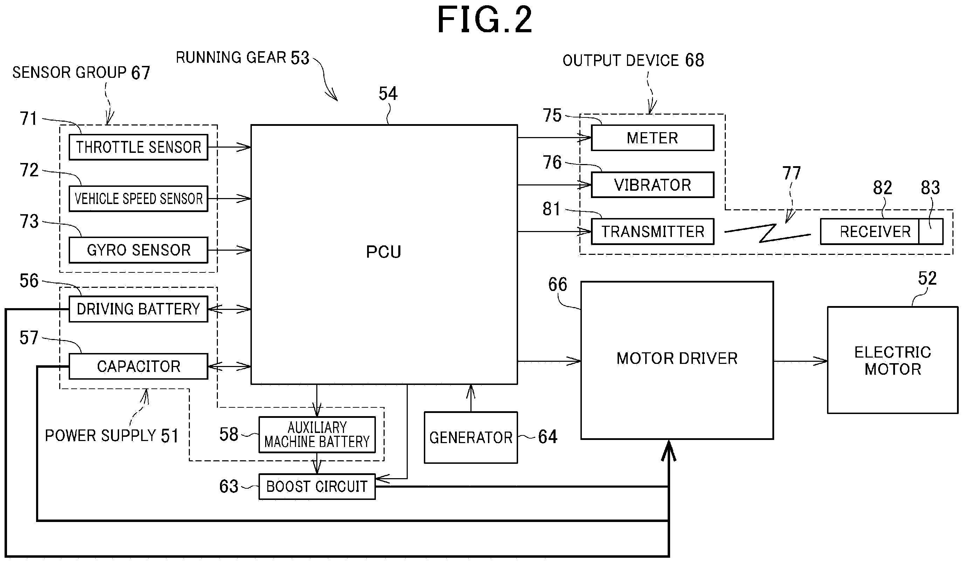

FIG. 2 is a block diagram of the running gear 53.

The running gear 53 includes the power supply 51, the electric motor 52, the PCU 54, a boost circuit 63, a generator 64, a motor driver 66, a sensor group 67, and an output device 68.

The power supply 51 includes the driving battery 56, the capacitor 57, and the auxiliary machine battery 58.

The driving battery 56 is configured to have a high voltage (for example, 96 V) in order to drive the electric motor 52.

While the capacitor 57 employs a capacitor system using an electrical double layer and can accumulate and discharge a voltage higher than that of the driving battery 56 in a short period, the capacitor 57 has a small electric power capacity. Thus, the capacitor 57 is limited to a usage for a short period only.

The auxiliary machine battery 58 supplies various auxiliary machines (such as an ignition device of the engine 20 (see FIG. 1), a kind of light devices, and an Electric Control Unit (ECU)) that is mounted to the motorcycle 10 (see FIG. 1) with an electric power. For example, the auxiliary machine battery 58 has an output voltage with a low voltage (for example, 12 V).

The electric motor 52 is a three-phase AC brushless one. As a driving source for a vehicle travel, the electric motor 52 supplies the rear wheel 16 with the driving power using a power supply electric power supplied from the power supply 51 or a generated electric power of the generator 64 described below. Further, the electric motor 52 functions as a generator at a time of braking the vehicle and a generated electric power of the generator is stored in at least one of the driving battery 56 and the capacitor 57. Note that the generated electric power may be stored in the auxiliary machine battery 58. To a rotation shaft included in the electric motor 52, the rear wheel 16 (see FIG. 1) is mounted. Note that the electric motor 52 may be configured to be, for example, a DC brushless one.

The generator 64 is a three-phase AC brushless one, generates electricity using a power of the engine 20, and a generated electric power of the generator 64 is stored in at least one of the driving battery 56 and the capacitor 57. Note that the generated electric power may be stored in the auxiliary machine battery 58.

The motor driver 66 is connected to each of the driving battery 56 and the capacitor 57 via an electric power supply line and is connected to the auxiliary machine battery 58 via the boost circuit 63. The boost circuit 63 boosts the voltage of the auxiliary machine battery 58 up to a predetermined voltage.

The PCU 54 doubles as the ECU and performs a control such that the PCU 54 outputs a command to the motor driver 66 to convert a DC electric power supplied from the power supply 51 into an AC electric power, so as to supply it to the electric motor 52. Further, the PCU 54 performs a control such that the PCU 54 outputs a command to the motor driver 66 to rectify the generated electric power of the generator 64 and a regenerative electric power at a time of performing a regeneration of the electric motor 52 from AC into DC, so as to charge the power supply 51.

Further, the PCU 54 converts the AC electric power generated by the generator 64 into the DC electric power and adjusts the voltage, so as to charge the power supply 51.

The sensor group 67 includes a throttle sensor 71, a vehicle speed sensor 72 to detect a rotation of the front wheel 13 (see FIG. 1) to calculate a vehicle speed, and a gyro sensor 73. The throttle sensor 71 detects a turning angle of a throttle valve included in a throttle body of the engine 20. The gyro sensor 73 detects an inclined angle (specifically, a pitch angle) of the vehicle.

The turning angle of the throttle valve matches or is proportional to a manipulated variable of a throttle grip (that is, a turning angle of the throttle grip and a throttle manipulated variable.) disposed in the handlebar 21 (see FIG. 1).

The gyro sensor 73 detects whether the vehicle is tilted rearward (accelerated) or tilted forward (decelerated).

The output device 68 includes a meter 75, a vibrator 76, and a short distance communication device 77.

The meter 75 displays a message at a time of, for example, accelerating the vehicle in addition to a vehicle speed, a mileage, an instruction direction of a blinker, a fuel remaining amount, and the like.

The vibrator 76 is disposed in a grip portion of the handlebar 21 (see FIG. 1) and vibrates to inform a rider of the message at the time of, for example, accelerating the vehicle.

The short distance communication device 77 includes a transmitter 81 and a receiver 82. The transmitter 81 is disposed on the vehicle body side. The receiver 82 is disposed inside the helmet of the rider. The transmitter 81 and the receiver 82 are wirelessly connected using, for example, Bluetooth (registered trademark). The receiver 82 includes a speaker 83, and the message at the time of, for example, accelerating the vehicle is sent from the speaker 83.

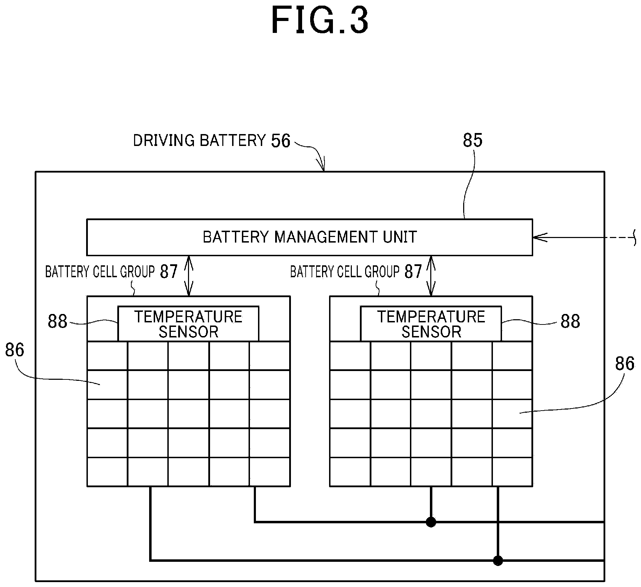

FIG. 3 is a drawing describing the driving battery 56.

The driving battery 56 includes a battery management unit 85 and a plurality of battery cell groups 87. Based on control information from the PCU 54 (see FIG. 2), the battery management unit 85 performs charge and discharge controls at a time of power running or at a time of regeneration in the electric motor 52 (see FIG. 2). The plurality of respective battery cell groups 87 include a plurality of cells 86.

The battery management unit 85 is connected to the PCU 54 via a communication line.

The plurality of battery cell groups 87 are connected to the motor driver 66 (see FIG. 2) via power supply lines and grounding conductors. In an inner portion of each of the battery cell groups 87, a temperature sensor 88 that detects a temperature of the cell 86 is arranged.

The cell is preferably a lithium-ion battery and a NiMH cell battery.

The battery management unit 85 subtracts an Ah at a time of discharge from an Ah (ampere hour) at a time of full charge to detect a battery remaining amount (State of Charge: SOC). Note that, instead of the Ah, a Wh (watt hour) may be used. Further, the battery remaining amount may be simply detected based on a voltage detection of the cell 86.

Further, the battery management unit 85 corrects an electric power at a time of charge and discharge by detecting the temperature of the cell 86 by the temperature sensor 88.

Further, the battery management unit 85 detects a breakdown of the cell 86, and at a time of the breakdown, information of the breakdown is transmitted to the PCU 54 via the battery management unit 85.

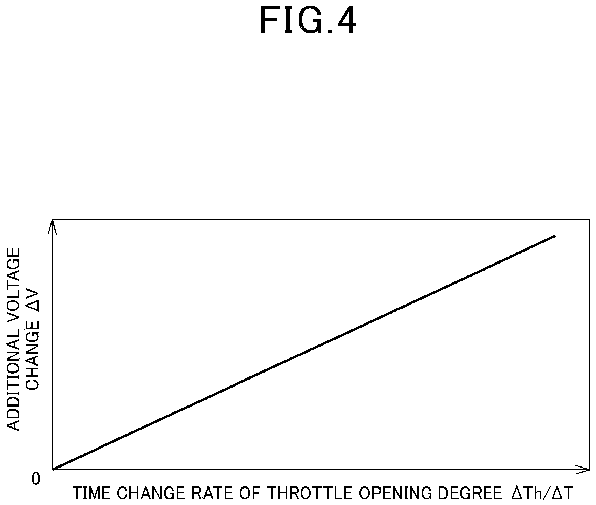

FIG. 4 is a graph illustrating a relationship between additional voltage change to the electric motor 52 and time change rate of a throttle opening degree.

The graph has the vertical axis indicating additional voltage changes ΔV (unit is bolt), and the graph has the horizontal axis indicating time change rates ΔTh/ΔT of a throttle opening degree (unit is °/sec) (Note that, "the time change rate ΔTh/ΔT of the throttle opening degree" is hereinafter referred to as, simply, "time change rate ΔTh/ΔT.").

Note that the ΔTh is a change of the throttle opening degree (change of the turning angle of the throttle valve) and is identical to or proportional to a change of the turning angle of the throttle grip. The ΔT is a unit time. The additional voltage change ΔV is an increased voltage with respect to an additional voltage to the electric motor 52 before the change of the throttle opening degree when a throttle opening degree Th is changed to increase in order to accelerate the vehicle during an engine operation.

The additional voltage change ΔV is linearly increased as the time change rate ΔTh/ΔT is gradually increased from zero. That is, the faster a speed of manipulating the throttle grip to accelerate the vehicle is, the more the additional voltage change ΔV to the electric motor 52 increases, and this leads to a rapid acceleration.

Note that, as described above, while a relationship between the additional voltage change ΔV and the time change rate ΔTh/ΔT is configured as a linear function, it is not limited to this. As the time change rate ΔTh/ΔT is increased, the additional voltage change ΔV may be configured to be exponentially increased.

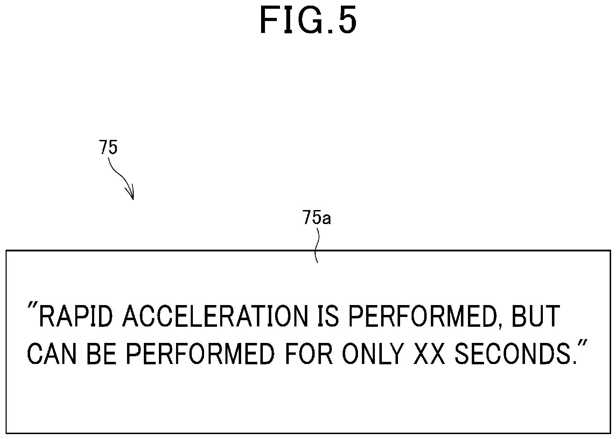

FIG. 5 is a drawing illustrating a display unit 75a of the meter 75.

For example, when the electric power is supplied from the capacitor 57 (see FIG. 2) to the electric motor 52 in order to rapidly accelerate the vehicle, since a power suppliable period is short, the power suppliable period is calculated to display "Rapid acceleration is performed, but can be performed for only XX seconds." on the display unit 75a.

The above-described message may be a flashing display. Further, as a remaining period of the power suppliable period decreases, the flashing speed may become fast. Further, instead of the above-described message, an indicator originally included in the meter 75 may be flashed in various patterns.

Further, an audio output may be performed along with the display of the above-described message. Further, sound information may be transmitted from the transmitter 81 of the short distance communication device 77 illustrated in FIG. 2 to the receiver 82 of the helmet using Bluetooth.

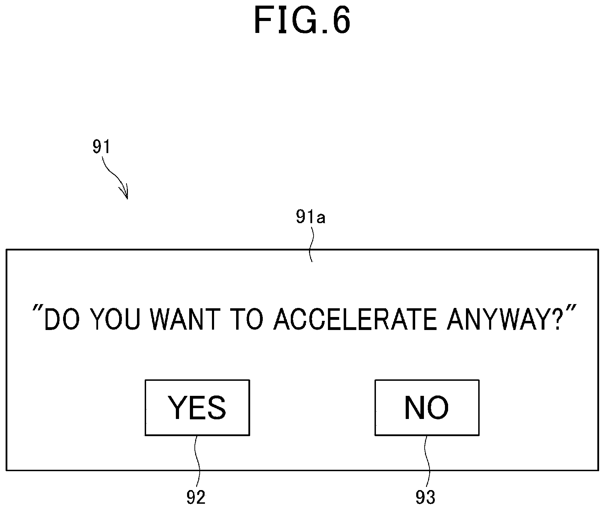

FIG. 6 is a drawing illustrating a display unit 91a of a meter 91 of a modification.

The display unit 91a includes a pair of touch-method keys 92 and 93. In one key 92, "YES" is described, and in the other key 93, "NO" is described.

For example, when the electric power is forced to be supplied to the electric motor 52 (see FIG. 2) using the auxiliary machine battery 58 (see FIG. 2) in order to rapidly accelerate the vehicle, since the power suppliable period is considerably short, the display unit 91a displays "Do you want to accelerate at any cost?" to ask an acceleration request for confirmation. In response to this question, one of the pair of keys 92 and 93 is touched to select it.

When "YES" of the one key 92 is selected, the electric power is supplied from the auxiliary machine battery 58 to the electric motor 52 to become an acceleration state. When "NO" of the other key 93 is selected, the electric power is not supplied from the auxiliary machine battery 58 to the electric motor 52, and the acceleration is not performed.

Note that an ON-and-OFF manipulation may be performed using a switch mounted to the vehicle (especially, mounted to the meter) other than the above-described "YES" and "NO" keys 92 and 93. Further, the ON-and-OFF manipulation may be performed using voice recognition.

Further, the display and the audio output of the above-described message may be performed. Further, the sound information may be transmitted from the transmitter 81 of the short distance communication device 77 illustrated in FIG. 2 to the receiver 82 of the helmet using Bluetooth.

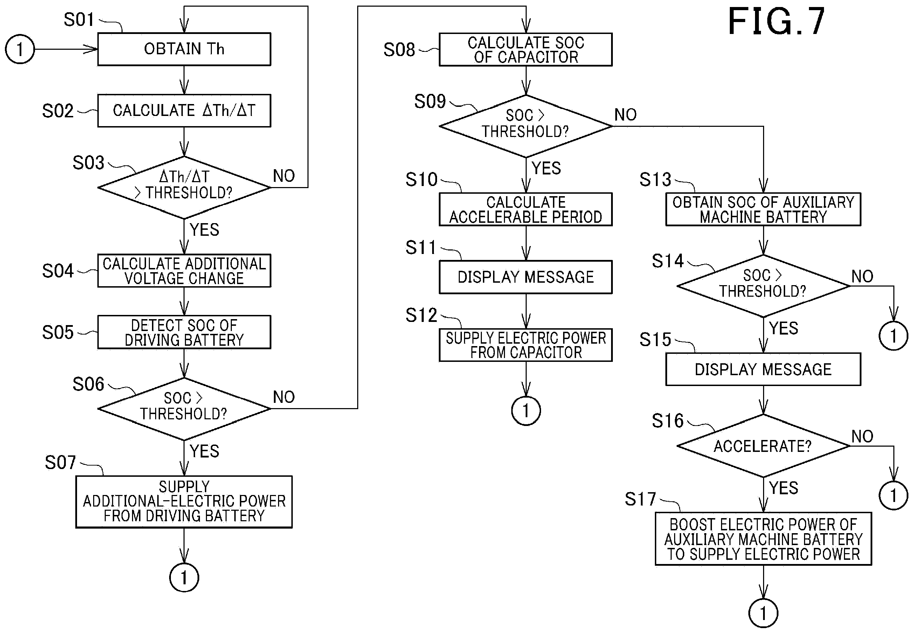

FIG. 7 is a flowchart illustrating operations of the running gear 53 of the first embodiment.

The following describes control flows of the running gear 53 (note that, regarding reference numerals in the description, see FIG. 1 to FIG. 3.).

First, the PCU 54 obtains the throttle opening degree (Th) from the throttle sensor 71 (Step S01). An intake device of the engine 20 includes the throttle body. In an intake passage of the throttle body, the throttle valve that opens and closes the intake passage is disposed. The throttle opening degree (Th) is a turning angle from the completely closed position of the throttle valve.

Note that, after that, the PCU 54 may obtain the vehicle speed from the vehicle speed sensor 72 (see FIG. 2). In accordance with this obtained vehicle speed, the PCU 54 may perform a control that adjusts the additional voltage change ΔV, which is described later.

Next, when the rider turns the throttle grip more than before in order to accelerate the vehicle, the throttle opening degree is changed (increased) by ΔTh. At this time, the PCU 54 calculates the time change rate (increasing rate) ΔTh/ΔT per a unit time ΔT (Step S02). This time change rate ΔTh/ΔT corresponds to an angular speed of the throttle valve.

Then, the PCU 54 determines whether the time change rate ΔTh/ΔT is larger than a threshold of the time change rate ΔTh/ΔT (Step S03).

When the time change rate ΔTh/ΔT is larger than the threshold (YES at Step S03), the additional voltage change ΔV to be added to the additional voltage for the electric motor 52 until then is calculated from the graph (See FIG. 4) illustrating the relationship between the additional voltage change ΔV and the time change rate ΔTh/ΔT of the throttle opening degree (Step S04).

When the time change rate ΔTh/ΔT is smaller than or equal to the threshold (NO at Step S03), the process returns to Step S01.

After the additional voltage change ΔV is calculated (Step S04), the PCU 54 causes the battery management unit 85 to detect the battery remaining amount (SOC) of the driving battery 56 (Step S05).

Next, the PCU 54 determines whether the SOC of the driving battery 56 is larger than a threshold (for example, 50% to 70% of the full charge) of the SOC of the driving battery 56 (Step S06).

When the SOC of the driving battery 56 is larger than the threshold (YES at Step S06), the PCU 54 adds the additional voltage change ΔV to the prior additional voltage V to supply it from the driving battery 56 to the electric motor 52 (Step S07). After that, the process returns to Step S01.

When the SOC of the driving battery 56 is smaller than or equal to the threshold (NO at Step S06), an SOC of the capacitor 57 is calculated (Step S08).

Next, the PCU 54 determines whether the SOC of the capacitor 57 is larger than a threshold (for example, 50% to 70% of the full charge) of the SOC of the capacitor 57 (Step S09).

When the SOC of the capacitor 57 is larger than the threshold (YES at Step S09), an accelerable period of the vehicle is calculated based on the SOC of the capacitor 57 (Step S10).

Further, based on the above-described accelerable period, the message "Rapid acceleration is performed, but can be performed for only XX seconds." (See FIG. 5) is displayed on the meter 91 (Step S11).

Then, the electric power is supplied from the capacitor 57 to the electric motor 52 (Step S12). Then, the process returns Step S01.

Further, at Step S09, when the SOC of the capacitor 57 is smaller than or equal to the threshold (NO at Step S09), an SOC of the auxiliary machine battery 58 is obtained (Step S13).

Next, it is determined whether the SOC of the auxiliary machine battery 58 is larger than a threshold (for example, 70% to 80% of the full charge) of the SOC of the auxiliary machine battery 58 (Step S14).

When the SOC of the auxiliary machine battery 58 is larger than the threshold (YES at Step S14), the message "Do you want to accelerate at any cost?" (see FIG. 6) is displayed on the meter 91 (Step S15).

Further, when the SOC of the auxiliary machine battery 58 is smaller than or equal to the threshold (NO at Step S14), the process returns to Step S01.

At Step S15, when the rider presses the key 92 (YES) (see FIG. 6) of the display unit 91a of the meter 91 (see FIG. 6) to select the request of acceleration (YES at Step S16), the electric power of the auxiliary machine battery 58 is boosted by the boost circuit 63 to supply it to the electric motor 52 (Step S17).

Further, at Step S16, when the rider presses the key 93 (NO) (See FIG. 6) of the display unit 91a of the meter 91 to select the request of non-acceleration (NO at Step S16), the process returns to Step S01.

### <Second Embodiment>

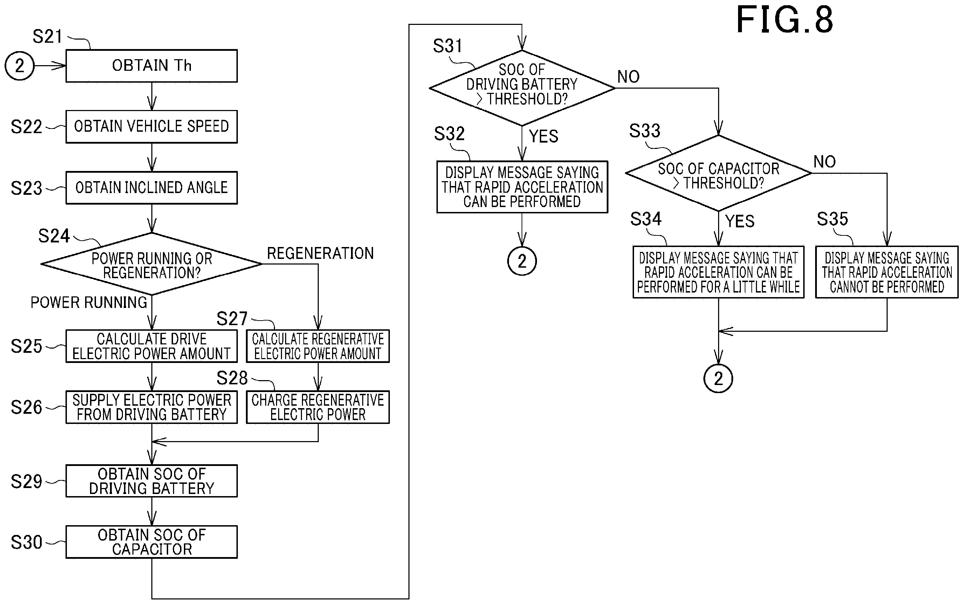

FIG. 8 is a flowchart illustrating operations of a second embodiment of the running gear 53.

The following describes control flows of the second embodiment of the running gear 53 (note that regarding reference numerals, see FIG. 1 to FIG. 3.).

First, the PCU 54 obtains a throttle opening degree (Th) from the throttle sensor 71 (Step S21).

Next, the PCU 54 obtains a vehicle speed from the vehicle speed sensor 72 (Step S22).

Further, the PCU 54 obtains an inclined angle of the vehicle from the gyro sensor 73 (Step S23).

Next, it is determined whether the electric motor 52 performs power running or regeneration (Step S24).

When the electric motor 52 performs the power running (power running at Step S24), a drive electric power amount of the electric motor 52 is calculated (Step S25).

Then, the PCU 54 supplies an electric power from the driving battery 56 to the electric motor 52 (Step S26).

Further, at Step S24, when the electric motor 52 performs the regeneration (regeneration at Step S24), the PCU 54 calculates a regenerative electric power amount of the electric motor 52 (Step S27).

Then, the PCU 54 charges the regenerative electric power to any of the driving battery 56, the capacitor 57, and the auxiliary machine battery 58 (Step S28).

After Step S26 or Step S28, the PCU 54 obtains an SOC of the driving battery 56 (Step S29).

Next, the PCU 54 obtains an SOC of the capacitor 57 (Step S30).

Here, the PCU 54 determines whether the SOC of the driving battery 56 is larger than a threshold of the SOC of the driving battery 56 (Step S31).

When the SOC of the driving battery 56 is larger than the threshold (YES at Step S31), the PCU 54 displays a message saying that rapid acceleration can be performed on the meter 75 (Step S32).

Then, the process returns to Step S21.

At Step S31, when the SOC of the driving battery 56 is smaller than or equal to the threshold (NO at Step S31), the PCU 54 determines whether the SOC of the capacitor 57 is larger than a threshold of the SOC of the capacitor 57 (Step S33).

When the SOC of the capacitor 57 is larger than the threshold (YES at Step S33), a message saying that rapid acceleration can be performed for a little while is displayed on the meter 75 (Step S34). Then, the process returns to Step S21.

At Step S33, when the SOC of the capacitor 57 is smaller than or equal to the threshold (NO at Step S33), a message saying that rapid acceleration cannot be performed is displayed on the meter 75 (Step S35). Then, the process returns to Step S21.

As described above, the running gear 53 in the motorcycle 10 as an electric vehicle includes the electric motor 52, the driving battery 56, the capacitor 57, the throttle sensor 71, and the PCU 54 as a control unit. The driving battery 56 supplies power to the electric motor 52. The capacitor 57 supplies power to the electric motor 52. The throttle sensor 71 detects the throttle manipulated variable (that is, a manipulated variable of the throttle grip.) by an occupant who rides the vehicle. The PCU 54 controls a power supply amount to the electric motor 52 in accordance with a throttle manipulated variable. The PCU 54 controls the power supply to the electric motor 52 based on the time change rate ΔTh/ΔT of the throttle manipulated variable.

According to this configuration, since the PCU 54 performs the power supply to the electric motor 52 based on the time change rate ΔTh/ΔT of the throttle manipulated variable, when it is applied to the motorcycle 10, this ensures the improved response that responds to the rapid acceleration request from the rider.

Further, when the time change rate ΔTh/ΔT is equal to or more than a predetermined value, the PCU 54 detects the remaining amount of the driving battery 56. When this remaining amount is equal to or more than the predetermined value, the PCU 54 performs the power supply from the driving battery 56 to the electric motor 52.

According to this configuration, when the driving battery 56 has a sufficient remaining amount, the PCU 54 can perform the power supply from the driving battery 56 to the electric motor 52.

Further, when the remaining amount of the driving battery 56 is less than the predetermined value, the PCU 54 detects the remaining amount of the capacitor 57. When the remaining amount of the capacitor 57 is equal to or more than the predetermined value, the PCU 54 performs the power supply from the capacitor 57 to the electric motor 52.

According to this configuration, since the PCU 54 can perform the power supply from the capacitor 57 to the electric motor 52, this ensures the improved response.

Further, the PCU 54 calculates how long the capacitor is capable of energizing when the capacitor 57 energizes the electric motor 52 and includes the output device 68 as a notification device that notifies the occupant of an energizable period.

According to this configuration, the occupant can grasp how long the rapid acceleration can be performed.

Further, the output device 68 is the meter 75 and displays the energizable period on the meter 75.

According to this configuration, the occupant can grasp the period during which the rapid acceleration can be performed by looking at the meter 75.

Further, the output device 68 is the speaker 83 as a sound output device.

According to this configuration, the occupant can grasp the period during which the rapid acceleration can be performed by listening to a sound.

Further, the output device 68 is the short distance communication device 77 that includes the transmitter 81 and the receiver 82. The transmitter 81 is disposed on the vehicle body side. The receiver 82 is disposed at the proximity of the rider and is disposed inside the helmet.

According to this configuration, while the helmet is worn, the period during which the rapid acceleration can be performed can be grasped.

Further, when the remaining amount of the capacitor 57 is less than the predetermined value, the PCU 54 detects the remaining amount of the auxiliary machine battery 58. When the remaining amount of the auxiliary machine battery 58 is equal to or more than the predetermined value, the PCU 54 asks the occupant a presence/absence of the acceleration request for confirmation.

According to this configuration, the presence/absence of the rapid acceleration request can be grasped using the auxiliary machine battery 58.

Further, when the acceleration request from the occupant is present, the voltage of the auxiliary machine battery 58 is boosted to perform the power supply to the electric motor 52.

According to this configuration, using the auxiliary machine battery 58 ensures performing the rapid acceleration.

### Reference Signs List

- 10: Motorcycle (electric vehicle)
- 52: Electric motor
- 53: Running gear
- 54: PCU (control unit)
- 56: Driving battery
- 57: Capacitor
- 58: Auxiliary machine battery
- 68: Output device (notification device)
- 71: Throttle sensor
- 75: Meter (notification device)
- 77: Short distance communication device (notification device)
- 81: Transmitter
- 82: Receiver
- 83: Speaker (notification device)

## Claims

1. A running gear comprising:
an electric motor (52);
a driving battery (56) configured to supply power to the electric motor (52);
a throttle sensor (71) configured to detect a throttle manipulated variable by an occupant who rides a vehicle; and
a control unit (54) configured to control a power supply amount to the electric motor (52) in accordance with a throttle manipulated variable and to control the power supply to the electric motor (52) based on a time change rate of the throttle manipulated variable
**characterized in that** the running gear further comprises
a capacitor (57) configured to supply power to the electric motor (52);
wherein when the time change rate is equal to or more than a predetermined value, the control unit (54) detects a remaining amount of the driving battery (56), and when the remaining amount is equal to or more than a predetermined value, the control unit (54) performs a power supply from the driving battery (56) to the electric motor (52),
when the remaining amount of the capacitor (57) is less than the predetermined value, the control unit (54) detects a remaining amount of an auxiliary machine battery (58), and when the remaining amount of the auxiliary machine battery (58) is equal to or more than a predetermined value, the control unit (54) asks the occupant a presence of an acceleration request for confirmation.

2. The running gear according to claim 1,
wherein the control unit (54) is configured to, when the remaining amount of the driving battery (56) is less than the predetermined value, detect a remaining amount of the capacitor (57), and two, when the remaining amount of the capacitor (57) is equal to or more than a predetermined value, perform a power supply from the capacitor (57) to the electric motor (52).

3. The running gear according to claim 2,
wherein the control unit (54) is configured to calculate how long the capacitor (57) is capable of energizing when the capacitor (57) energizes the electric motor (52), and the control unit (54) is configured to include a notification device (68) that notifies the occupant of an energizable period.

4. The running gear according to claim 4,
wherein the notification device (68) is a meter (75) and is configured to display the energizable period on the meter (75).

5. The running gear according to claim 34,
wherein the notification device (68) is a sound output device (83).

6. The running gear according to claim 3,
wherein the notification device (68) is a short distance communication device (77) that is configured to include a transmitter (81) and a receiver (82), the transmitter (81) being disposed on a vehicle body side, the receiver (82) being disposed at a proximity of a rider.

7. The running gear according to claim 1,
wherein when the acceleration request from the occupant is present, a voltage of the auxiliary machine battery (58) is boosted to supply power to the electric motor (52).

## Patentansprüche

1. Fahrantrieb aufweisend:
einen Elektromotor (52);
eine Antriebsbatterie (56), die so ausgebildet ist, dass sie den Elektromotor (52) mit Strom versorgt;
einen Drosselklappensensor (71), der so ausgebildet ist, dass er eine von einem ein Fahrzeug führenden Fahrzeuginsassen manipulierte Drosselklappenstellgröße erfasst; und
eine Steuereinheit (54), die so konfiguriert ist, dass sie eine Stromversorgungsmenge für den Elektromotor (52) gemäß einer Drosselklappenstellgröße steuert und die Stromversorgungsmenge für den Elektromotor (52) auf der Grundlage einer Zeitänderungsrate der Drosselklappenstellgröße steuert
**dadurch gekennzeichnet, dass** der Fahrantrieb ferner aufweist
einen Kondensator (57), der so ausgebildet ist, dass er den Elektromotor (52) mit Strom versorgt;
wobei, wenn die Zeitänderungsrate gleich oder größer als ein vorbestimmter Wert ist, die Steuereinheit (54) eine verbleibende Menge der Antriebsbatterie (56) erfasst, und wenn die verbleibende Menge gleich oder größer als ein vorbestimmter Wert ist, die Steuereinheit (54) eine Energieversorgung von der Antriebsbatterie (56) zum Elektromotor (52) durchführt,
wenn die verbleibende Menge des Kondensators (57) kleiner als der vorbestimmte Wert ist, die Steuereinheit (54) eine verbleibende Menge einer Maschinenhilfsbatterie (58) erfasst, und wenn die verbleibende Menge der Maschinenhilfsbatterie (58) gleich oder größer als ein vorbestimmter Wert ist, die Steuereinheit (54) den Insassen zwecks Bestätigung nach dem Vorhandensein einer Beschleunigungsanfrage fragt.

2. Fahrantrieb nach Anspruch 1,
wobei die Steuereinheit (54) so konfiguriert ist, dass sie, wenn die verbleibende Menge der Antriebsbatterie (56) kleiner als der vorbestimmte Wert ist, eine verbleibende Menge des Kondensators (57) erfasst, und dass sie, wenn die verbleibende Menge des Kondensators (57) gleich oder größer als ein vorbestimmter Wert ist, eine Energieversorgung von dem Kondensator (57) zu dem Elektromotor (52) durchführt.

3. Fahrantrieb nach Anspruch 2,
wobei die Steuereinheit (54) so konfiguriert ist, dass sie berechnet, wie lange der Kondensator (57) in der Lage ist, Energie zu liefern, wenn der Kondensator (57) den Elektromotor (52) versorgt, und die Steuereinheit (54) so konfiguriert ist, dass sie eine Benachrichtigungsvorrichtung (68) aufweist, die den Insassen über eine beanspruchbare Versorgungsdauer benachrichtigt.

4. Fahrantrieb nach Anspruch 4,
wobei die Benachrichtigungsvorrichtung (68) einen Zähler (75) darstellt und so ausgebildet ist, dass sie die beanspruchbare Versorgungsdauer auf dem Zähler (75) anzeigt.

5. Fahrantrieb nach Anspruch 4,
wobei die Benachrichtigungsvorrichtung (68) eine Tonausgabevorrichtung (83) darstellt.

6. Fahrantrieb nach Anspruch 3,
wobei die Benachrichtigungsvorrichtung (68) eine kurzreichweitige Kommunikationsvorrichtung (77) darstellt, die so ausgebildet ist, dass sie einen Sender (81) und einen Empfänger (82) aufweist, wobei der Sender (81) an einer Fahrzeugkarosserieseite angeordnet ist und der Empfänger (82) in der Nähe eines Fahrers angeordnet ist.

7. Fahrantrieb nach Anspruch 1,
wobei, wenn die Beschleunigungsanfrage von dem Insassen vorliegt, eine Spannung der Hilfsmaschinenbatterie (58) erhöht wird, um den Elektromotor (52) mit Strom zu versorgen.

## Revendications

1. Train de roulement comprenant :
un moteur électrique (52) ;
une batterie de traction (56) configurée pour alimenter en courant le moteur électrique (52) ;
un capteur de papillon des gaz (71) configuré pour détecter une variable manipulée de papillon des gaz par un occupant qui conduit un véhicule ; et
une unité de commande (54) configurée pour commander une quantité d'alimentation en courant du moteur électrique (52) conformément à une variable manipulée de papillon des gaz et pour commander l'alimentation en courant du moteur électrique (52) sur la base d'une vitesse de changement dans le temps de la variable manipulée de papillon des gaz
**caractérisé en ce que** le train de roulement comprend en outre
un condensateur (57) configuré pour alimenter en courant le moteur électrique (52) ;
dans lequel lorsque la vitesse de changement dans le temps est égale ou supérieure à une valeur prédéterminée, l'unité de commande (54) détecte une quantité restante de la batterie de traction (56), et lorsque la quantité restante est égale ou supérieure à une valeur prédéterminée, l'unité de commande (54) effectue une alimentation en courant à partir de la batterie de traction (56) jusqu'au moteur électrique (52), lorsque la quantité restante du condensateur (57) est inférieure à la valeur prédéterminée, l'unité de commande (54) détecte une quantité restante d'une batterie de machine auxiliaire (58), et lorsque la quantité restante de la batterie de machine auxiliaire (58) est égale ou supérieure à une valeur prédéterminée, l'unité de commande (54) demande à l'occupant une présence d'une requête d'accélération pour confirmation.

2. Train de roulement selon la revendication 1,
dans lequel l'unité de commande (54) est configurée pour, lorsque la quantité restante de la batterie de traction (56) est inférieure à la valeur déterminée, détecter une quantité restante du condensateur (57), et deux, lorsque la quantité restante du condensateur (57) est égale ou supérieure à une valeur prédéterminée, effectuer une alimentation en courant à partir du condensateur (57) jusqu'au moteur électrique (52).

3. Train de roulement selon la revendication 2,
dans lequel l'unité de commande (54) est configurée pour calculer pendant combien de temps le condensateur (57) est capable de transmettre de l'énergie lorsque le condensateur (57) transmet de l'énergie au moteur électrique (52), et l'unité de commande (54) est configurée pour comporter un dispositif de notification (68) qui notifie à l'occupant une période de possibilité de transmission d'énergie.

4. Train de roulement selon la revendication 3,
dans lequel le dispositif de notification (68) est un compteur (75) et est configuré pour afficher la période de possibilité de transmission d'énergie sur le compteur (75).

5. Train de roulement selon la revendication 4,
dans lequel le dispositif de notification (68) est un dispositif de sortie de son (83).

6. Train de roulement selon la revendication 3,
dans lequel le dispositif de notification (68) est un dispositif de communication à courte distance (77) qui est configuré pour comporter un émetteur (81) et un récepteur (82), l'émetteur (81) étant disposé sur un côté carrosserie de véhicule, le récepteur (82) étant disposé à une proximité d'un motocycliste.

7. Train de roulement selon la revendication 1,
dans lequel lorsque la requête d'accélération en provenance de l'occupant est présente, une tension de la batterie de machine auxiliaire (58) est amplifiée pour alimenter en courant le moteur électrique (52).
